(19) Europäisches Patentamt
European Patent Office
Office européen des brevets

(11) **EP 1 652 888 B1**

(12) **EUROPEAN PATENT SPECIFICATION**

(45) Date of publication and mention
of the grant of the patent:
**18.07.2007 Bulletin 2007/29**

(51) Int Cl.:
***C08L 77/06*** (2006.01)   ***C08J 5/00*** (2006.01)
***F16H 53/02*** (2006.01)

(21) Application number: **05256698.1**

(22) Date of filing: **28.10.2005**

(54) **Resinous cam gear**

Nockengetriebe aus Kunststoff

Rouen à came en matière synthétique

(84) Designated Contracting States:
**ES FR GB IT**

(30) Priority: **29.10.2004 JP 2004316731**
**02.06.2005 JP 2005162697**

(43) Date of publication of application:
**03.05.2006 Bulletin 2006/18**

(73) Proprietor: **HONDA MOTOR CO., Ltd.**
**Tokyo (JP)**

(72) Inventors:
• **Koyama, Kazutake**
**Wako-shi**
**Saitama (JP)**
• **Satake, Koji**
**Wako-shi**
**Saitama (JP)**
• **Yonemura, Masahiro**
**Wako-shi**
**Saitama (JP)**

• **Kashimura, Tsugunori,**
**Kuraray Co., Ltd.**
**Tokyo (JP)**
• **Yamashita, Takashi**
**Tsukuba-shi**
**Ibaraki (JP)**
• **Munesawa, Yuji**
**Tsukuba-shi**
**Ibaraki (JP)**

(74) Representative: **Goddard, Christopher Robert**
**Frank B. Dehn & Co.**
**St Bride's House**
**10 Salisbury Square**
**London EC4Y 8JD (GB)**

(56) References cited:
EP-A- 0 738 763     US-A- 4 563 495
US-A- 5 763 517     US-A1- 2002 019 471

• **PATENT ABSTRACTS OF JAPAN vol. 1998, no. 02, 30 January 1998 (1998-01-30) & JP 09 273403 A (MITSUBISHI HEAVY IND LTD), 21 October 1997 (1997-10-21)**

**Description**

The present invention relates to a resinous cam gear for use in an engine.

Efforts have hitherto been made to manufacture engine parts from a resin to achieve a reduction in their weight and their cost of manufacture. For example, Official Gazette JP- A-H9-273403 discloses a journal, a cam and a cam gear which are formed by injection molding from a material like nylon 46. Engine parts made of a resin do not require heat treatment, though metallic parts do. Accordingly, resinous parts can be manufactured at a lower cost.

A general-purpose engine mounted on e.g. a grass or lawn mower, or an agricultural machine repeats starting and stopping frequently because of the nature of the work for which the mower or machine is used. The engine is not warmed satisfactorily if it repeats starting and stopping frequently. When the engine is not warmed satisfactorily, water vapor in the crankcase or blowby gas forms dew on the inner wall of the crankcase. The water which has formed dew enters various sections of the engine and causes inconveniences thereto.

The use of nylon-46 parts in an engine repeating starting and stopping frequently is effective for avoiding dew formation. Another inconvenience encountered is, however, a gradually increasing abnormal noise called gear noise. The examination of a disassembled engine has revealed an increase in dimensions of the gear and cam. The parts which have become larger than normal have been found to interfere with each other and produce the abnormal noise. The increase in dimensions is apparently due to the swelling of nylon 46 by the absorption of water.

Thus, it is necessary to manufacture a cam and a gear from a material having a low water-absorbing capacity for an engine of the type which repeats starting and stopping frequently.

According to the present invention, there is provided a resinous cam gear formed from a resinous material comprising 100 parts by weight of polyamide and 5 to 20 parts by weight of modified polyolefin, the polyamide being composed of dicarboxylic acid units containing 60 to 100 mole % of terephthalic acid units and diamine units containing 60 to 100 mole % of 1, 9-nonanediamine units and/or 2-methyl-1, 8-octadiamine units.

The polyamide containing 60 to 100 mole % of terephthalic acid and 60 to 100 mole % of 1, 9-nonanediamide and/or 2-methyl-1, 8-octadiamine has a water-absorbing capacity which is approximately 1/10 of that of nylon 46. Thus, the polyamide according to this invention is a material having a very low water-absorbing capacity.

The addition of 5 to 20 parts by weight of modified polyolefin to the polyamide increases its durability and wear resistance. The modified polyolefin preferably has a tensile modulus of 50 MPa or below at 23°C. The tensile modulus is calculated by dividing stress by strain and a material having a lower tensile modulus is higher in elasticity. A part made of a material of high elasticity is not broken easily, but has a prolonged life. Accordingly, a resinous material having a low tensile modulus gives a cam gear of high durability.

A preferred embodiment of the this invention will now be described in detail, by way of example only, with reference to the accompanying drawings, in which:

FIG. 1 is a sectional view of the essential part of an engine having a resinous cam gear embodying this invention;
FIG. 2 is a front elevational view of the resinous cam gear embodying this invention; and
FIG. 3 is a side elevational view of the resinous cam gear embodying this invention.

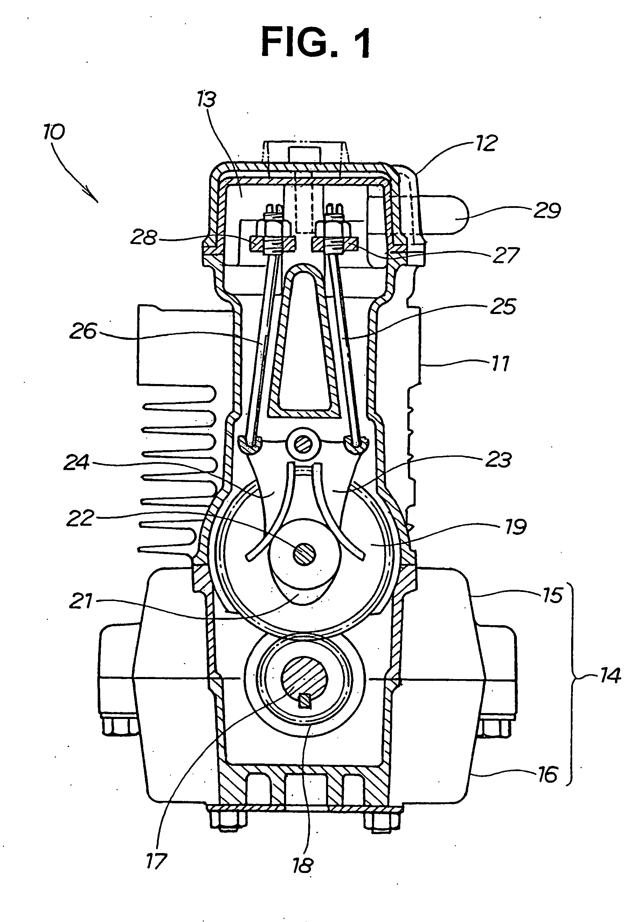

Referring first to FIG. 1, an engine 10 has an operating valve chamber 13 formed by placing a head cover 12 on top of an integrated cylinder head and block 11 and a crankcase 14 formed under the cylinder block 11. The crankcase 14 has an upper half 15 and a lower half 16 which are vertically separable from each other.

A crankshaft 17 is disposed between the upper and lower halves 15 and 16 of the crankcase 14 and a driving timing gear 18 is fitted on the crankshaft 17. The driving timing gear 18 is used to rotate a driven timing gear 19 supported rotatably in the cylinder block 11 to rotate a cam 21 formed integrally with the driven timing gear 19. The cam 21 will be described in further detail later.

A pair of cam followers 23 and 24 are supported rotatably on a shaft 22 secured to the cylinder block 11. A pair of push rods 25 and 26 extend from the cam followers 23 and 24, respectively, and a pair of rocker arms 27 and 28 are connected to the upper ends of the push rods 25 and 26, respectively.

When the cam 21 is rotated counterclockwise in FIG. 1, the cam follower 23 is rotated to raise the push rod 25 and thereby push up the rocker arm 27. The rocker arm 27 is shaped like a seesaw and when it moves up at one end closer to the viewer of the drawing, it moves down at its opposite end. When the cam 21 is further rotated, the cam follower 23 returns to its original position. Then, the other cam follower 24 is rotated to perform a similar operation. Thus, it is possible to open and close the intake and exhaust valves of the engine with a predetermined timing.

A general-purpose engine mounted on e.g. a grass or lawn mower, or an agricultural machine repeats starting and stopping frequently because of the nature of the work for which the mower or machine is used. The engine is not warmed satisfactorily if it repeats starting and stopping frequently. If the engine remains cold, water vapor in the crankcase or blowby gas forms dew on the inner wall of the crankcase and the water which has formed dew enters various sections of the engine.

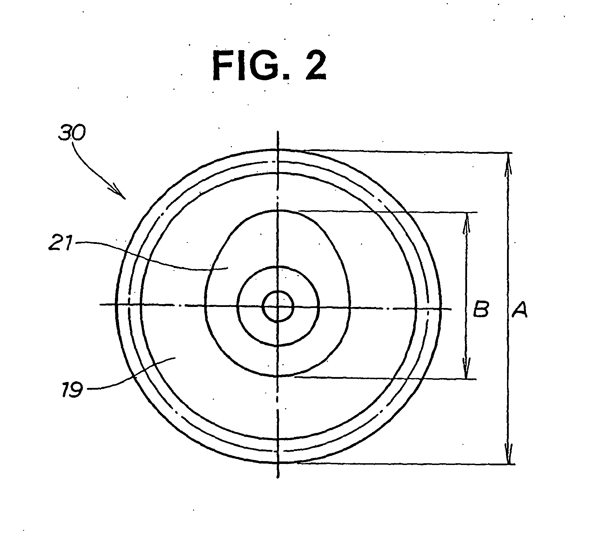

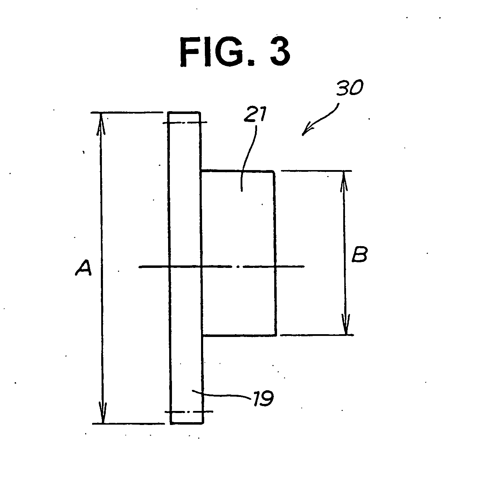

The driven timing gear 19 and the cam 21 form a resinous cam gear 30, as shown in FIG. 2. The cam 21 forms an integral part of the driven timing gear 19, as shown in FIG. 3. The gear 19 has an outside diameter indicated as A, while the cam 21 has a major diameter indicated as B, for the convenience of evaluation of the results of experiments which will be described later.

Description will now be made in detail of the preferred materials for the resinous cam gear 30. The dicarboxylic acid units forming the polyamide for the cam gear according to this invention contain 60 to 100 mole %, preferably 75 to 100 mole % and more preferably 90 to 100 mole % of terephthalic acid units. If the proportion of the terephthalic acid units is less than 60 mole %, the cam gear has a lower degree of heat resistance.

The dicarboxylic acid units may contain other dicarboxylic acid units in addition to the terephthalic acid units if their proportion does not exceed 40 mole %. The other dicarboxylic acid units may be ones derived from aliphatic dicarboxylic acid, such as malonic acid, dimethylmalonic acid, succinic acid, glutaric acid, adipic acid, 2-methyladipic acid, trimethyladipic acid, pimelic acid, 2, 2-dimethylglutaric acid, 2, 2-diethylsuccinic acid, azelaic acid, sebacic acid and suberic acid; alicyclic dicarboxylic acids, such as 1, 3-cyclopentanedicarboxylic acid and 1, 4-cyclohexanedicarboxylic acid; or aromatic dicarboxylic acids, such as isophthalic acid, 2, 6-naphthalenedicarboxylic acid, 2, 7-naphthalenedicarboxylic acid, 1, 4-naphthalenedicarboxylic acid, 1, 4-phenylenedioxydiacetic acid, 1, 3-phenylenedioxy-diacetic acid, diphenic acid, dibenzoic acid, 4, 4'-hydroxydibenzoic acid, diphenylmethane-4,4'-dicarboxylic acid, diphenylsulfone-4, 4'-dicarboxylic acid and 4, 4'-biphenyl- dicarboxylic acid. One or more kinds of units can be used. The units derived from aromatic dicarboxylic acids are, among others, preferred.

The proportion of the other dicarboxylic acid units is preferably 25 mole % or less and more preferably 10 mole % or less. The dicarboxylic acid units may further contain units derived from polycarbxylic acids, such as trimellitic acid, trimesic acid and pyromellitic acid, to the extent allowing melt forming.

The diamine units forming the polyamide according to this invention contain 60 to 100 mole %, preferably 75 to 100 mole % and more preferably 90 to 100 mole % of 1, 9-nonanediamine and/or 2-methyl-1, 8-octanediamine units. When both 1, 9- nonanediamine and 2-methyl-1, 8-octanediamine units are employed, their molar ratio (1, 9-nonanediamine = 2-methyl-1, 8-octanediamine) is preferably in the range of 90:10 to 50:50 and more preferably in the range of 80:20 to 50:50. The polyamide containing 1, 9-nonanediamine and/or 2-methyl-1, 8-octanediamine units in the proportion as stated gives a resinous cam gear which is excellent in toughness, sliding property, heat resistance, moldability, low water absorption and lightness in weight.

The diamine units may contain diamine units other than 1, 9-nonanediamine and 2-methyl-1, 8-octanediamine if their proportion does not exceed 40 mole %. The other diamine units may be ones derived from aliphatic diamines, such as ethylene- diamine, propylenediamine, 1, 4-butanediamine, 1, 6-hexane-diamine, 1, 8-octanediamine, 1, 10-decanediamine, 1, 12-dodecanediamine, 3-methyl-1, 5-pentanediamine, 2, 4, 4-trimethyl-1, 6-hexanediamine, 2, 2, 4-trimethyl-1, 6-hexanediamine and 5-methyl-1, 9-nonanediamine; alicyclic diamines, such as cyclohexanediamine, methylcyclohexane-diamine and isophoronediamine; or aromatic diamines, such as p-phenylenediamine, m-phenylenediamine, xylenediamine, 4, 4'-diaminodiphenylmethane, 4, 4'-diaminodiphenylsulfone and 4, 4'-diaminodiphenylether. One or more kinds of diamine units can be employed. The proportion of the other diamine units is preferably 25 mole % or less and more preferably 10 mole % or less.

The polyamide used for the purpose of this invention preferably has at least 10% of the terminal groups of its molecular chains stopper by a terminal stopper. The ratio of the terminal groups of its molecular chains stopped by a terminal stopper (stopped terminal ratio) is more preferably at least 40% and still more preferably at least 60%. The polyamide having a stopped terminal ratio of at least 10% shows an improved stability when melted to form a cam gear, and facilitates the manufacture of a resinous cam gear having excellent physical properties including hot water resistance.

The stopped terminal ratio of the polyamide can be calculated by determining the number of its terminal carboxyl groups, the number of its terminal amino groups and the number of its terminal groups stopped by the terminal stopper and employing formula (1) below. It is desirable from accuracy and simplicity standpoints to determine the numbers of the terminal groups from the integrated values of characteristic signals corresponding to the terminal groups by means of $^1$H-NMR.

$$\text{Stopped terminal ratio (\%)} = [(A - B)/A] \times 100 \qquad (1)$$

[where A stands for the total number of terminal groups of molecular chains (which is usually equal to twice as large as the number of polyamide molecules) and B stands for the total number of terminal carboxyl and amino groups.]

Any monofunctional compound having reactivity with the terminal amino or carboxyl groups of the polyamide can be used as the terminal stopper without any particular limitation. Monocarboxylic acids or monoamines are, however, preferable because of reactivity, the stability of stopped terminals, and monocarboxylic acids are more preferable because of ease of handling. Other examples that can be used are acid anhydrides such as phthalic anhydride, monoisocyanates, monoacid halides, monoesters and monoalcohols.

Any monocarboxylic acid can be used without any particular limitation as the terminal stopper if it is reactive with the amino group. Examples are aliphatic monocarboxylic acids, such as acetic acid, propionic acid, butyric acid, valeric acid, caproic acid, caprylic acid, lauric acid, tridecanoic acid, myristic acid, palmitic acid, stearic acid, pivalic acid and isobutyric acid; alicyclic monocarboxylic acids, such as cyclohexanecarboxylic acid; aromatic monocarboxylic acids, such as benzoic acid, toluic acid, $\alpha$-naphthalenecarboxylic acid, $\beta$-naphthalene- carboxylic acid, methylnaphthalenecarboxylic acid and phenyl- acetic acid; and their mixtures. Acetic acid, propionic acid, butyric acid, valeric acid, caproic acid, caprylic acid, lauric acid, tridecanoic acid, myristic acid, palmitic acid, stearic acid and benzoic acid are, among others, preferred because of reactivity, stability of stopped terminals, prices.

Any monoamine can be used without any particular limitation as the terminal stopper if it is reactive with the carboxyl group. Examples are aliphatic monoamines, such as methylamine, ethylamine, propylamine, butylamine, hexylamine, octylamine, decylamine, stearylamine, dimethylamine, diethylamine, dipropylamine and dibutylamine; alicyclic monoamines, such as cyclohexylamine and dicyclohexylamine; aromatic monoamines, such as aniline, toluidine, diphenyl- amine and naphthylamine; and their mixtures. Butylamine, hexylamine, octylamine, decylamine, stearylamine, cyclohexylamine and aniline are, among others, preferred because of reactivity, boiling points, stability of stopped terminals, prices.

Any known method of manufacturing a crystalline polyamide can be used to prepare the polyamide for the purpose of this invention. For example, solution or interfacial polymerization can be employed by using acid chlorides and diamines as raw materials, and melt, solid-phase or melt- extrusion polymerization by using dicarboxylic acids and diamines.

More specifically, the polyamide can, for example, be prepared by forming a nylon salt from diamine, dicarboxylic acid, a catalyst and a terminal stopper as required, heating it at a temperature of 200°C to 250°C to form a prepolymer having an intrinsic viscosity [η] of 0.1 to 0.6 dl/g at 30°C in concentrated sulfuric acid and subjecting it to solid-phase or melt-extrusion polymerization. The prepolymer having an intrinsic viscosity [η] of 0.1 to 0.6 dl/g ensures the minimization of any worsening in molar balance between carboxyl and amino groups and any reduction in the rate of polymerization during the final stage of polymerization. As a result, it is possible to obtain a polyamide having a narrower molecular weight distribution and excellent physical properties and moldability.

When solid-phase polymerization is employed as the final stage of polymerization, it is preferably performed at a reduced pressure or in the presence of an inert gas. When a polymerization temperature of 200 °C to 280 °C is employed, it is possible to obtain a high rate of polymerization and a high level of productivity, while avoiding any coloration and gelation effectively. When melt extrusion is employed as the final stage of polymerization, a polymerization temperature not exceeding 370 °C is preferably employed to ensure the preparation of a polyamide hardly decomposed or deteriorated.

When preparing the polyamide, it is possible to add a catalyst in addition to the terminal stopper as stated before and employ phosphoric, phosphorous or hypophosphorous acid, or a salt or ester thereof as such. Examples of the salts and esters are a salt of phosphoric, phosphorous or hypophosphorous acid and a metal, such as potassium, sodium, magnesium, palladium, calcium, zinc, cobalt, manganese, tin, tungsten, germanium, titanium or antimony; an ammonium salt of phosphoric, phosphorous or hypophosphorous acid; and an ethyl, isopropyl, butyl, hexyl, isodecyl, octadecyl, decyl, stearyl or phenyl ester of phosphoric, phosphorous or hypophosphorous acid.

The polyamide preferably has an intrinsic viscosity [η] of 0.6 to 2.0 dl/g, more preferably 0.7 to 1.9 dl/g and still more preferably 0.8 to 1.8 dl/g, as determined at 30°C in concentrated sulfuric acid. Any polyamide having an intrinsic viscosity below 0.6 dl/g may fail to give a cam gear having satisfactory mechanical properties and any polyamide having an intrinsic viscosity over 2.0 dl/g may be too low in fluidity to mold a cam gear satisfactorily.

Any known modified polyolefin can be used for the purpose of this invention. Examples are modified polyolefins having functional groups, such as carboxyl, acid anhydride and/or epoxy groups, in the molecule. These modified polyolefins can be prepared by, for example, copolymerizing or adding monomers having functional groups, such as carboxyl, acid anhydride and/or epoxy groups, in the molecule. Examples of the monomers having such functional groups are $\alpha$, $\beta$-unsaturated dicarboxylic acids, such as acrylic acid, methacrylic acid, maleic acid, fumaric acid, itaconic acid and phthalic acid; $\alpha$, $\beta$-unsaturated dicarboxylic acid anhydrides, such as maleic anhydride, itaconic anhydride and phthalic anhydride; and compounds having epoxy groups, such as glycidyl acrylate, glycidyl methacrylate and allyl glycidyl ether. Preferred monomers are $\alpha$, $\beta$-unsaturated dicarboxylic acid anhydrides, such as maleic anhydride, itaconic anhydride and phthalic anhydride, and the most preferable thereof is maleic anhydride.

Thus, examples of the modified polyolefins are copolymers of monomers having functional groups as mentioned above and olefin compounds not having any functional groups such as carboxyl, acid anhydride or epoxy groups in the molecule. Examples of the olefin compounds not having any functional group are ethylene; propylene; and $\alpha$-olefins having 4 to 20 carbon atoms, such as 1-butene, 1-pentene, 4-methyl-1-pentene, 1-hexene, 1-octene, 1-decene and 1-dodecene. One or more such compounds can be employed.

The modified polyolefins may also be copolymers of, for example, $\alpha$, $\beta$-unsaturated carboxylic acid esters, such as methyl acrylate, ethyl acrylate, butyl acrylate, 2-ethylhexyl acrylate, cyclohexyl acrylate, methyl methacrylate, ethyl methacrylate, butyl methacrylate, 2-ethylhexyl methacrylate and cyclohexyl methacrylate; and acrylonitrile, methacrylonitrile, acrolein, methacrolein, ethyl vinyl ether, styrene or vinyl acetate.

The modified polyolefins can also be prepared by adding monomers having functional groups as mentioned above to polymers formed from olefin compounds not having any functional group as mentioned above. The addition of the monomers having functional groups can be carried out by, for example, melting and mixing them with the polymers in the presence of a radical initiator, such as an organic peroxide, if required.

The modified polyolefins may also be copolymers containing, for example, non-conjugated dienes, such as 1, 4-hexadiene, dicyclopentadiene, 5-ethylidene-2-norbornene and 2, 5-norbornadiene; conjugated dienes, such as butadiene, isoprene and piperylene; and vinyl acetate, acrylic acid, methacrylic acid or acrylic or methacrylic acid esters. When the modified polyolefins contain structural units derived from the non-conjugated or conjugated dienes, the aliphatic carbon-to-carbon double bonds coming from the dienes may be hydrogenated, if required.

The modified polyolefin preferably has a basic skeleton of an olefin polymer formed from a compound selected from ethylene, propylene and α-olefins having 4 to 20 carbon atoms to produce a polyamide composition of high impact resistance. More specifically, it is preferable to use a modified polyolefin having a basic skeleton formed from polyethylene, polypropylene or an ethylene-α-olefin copolymer, such as an ethylene-propylene copolymer, an ethylene-1-butene copolymer or an ethylene-1-octene copolymer.

Discussion will now be made of the tensile modulus of the modified polyolefin. The tensile modulus is calculated by dividing stress by strain and a material having a lower tensile modulus is higher in elasticity. A part made of a material of high elasticity is not broken easily, but has a prolonged life. Accordingly, a resinous material having a low tensile modulus gives a cam gear of high durability. The modified polyolefin used for the purpose of this invention preferably has a tensile modulus of 50 MPa or below and more preferably 30 MPa or below at 23°C. The values of the tensile modulus as herein stated were determined as specified by JIS K 6922-2.

The materials for the resinous cam gear according to this invention may further contain any known filler, copper-based stabilizer, hindered phenol-based oxidation inhibitor, coloring agent, ultraviolet absorber, light stabilizer, antistatic agent, plasticizer, lubricant, crystal nucreating agent, flame retardant, or other polymer, if required.

Example Experiments

Description will now be made of various examples of experiments conducted according to this invention, though these examples are not intended to limit the scope of this invention. In the following description, "G" means "Good" and "NG" means "Not Good".

Materials

Materials shown as 1 to 6 in Table 1 below were prepared for the selection of a suitable material for a resinous cam gear for a general-purpose engine.

Table 1

| Material No. | Symbol | Proportion (parts by weight) | | Polyamide composition | Viscosity [η] |
|---|---|---|---|---|---|
| | | Modified polyolefin | Polyamide | | |
| Material 1 | PA9T | 0 | 100 | Polyamide containing 1,9-nonanediamine and 2-methyl- 1, 8-octanediamine in a molar ratio of 80:20 as diamines and terephthalic acid as dicarboxylic acid | 1.2 |
| Material 2 | PA9T+5 | 5 | 100 | Polyamide containing 1,9-nonanediamine and 2-methyl- 1, 8-octanediamine in a molar ratio of 80:20 as diamines and terephthalic acid as dicarboxylic acid | 1.2 |

(continued)

| Material No. | Symbol | Proportion (parts by weight) | | Polyamide composition | Viscosity [η] |
|---|---|---|---|---|---|
| | | Modified polyolefin | Polyamide | | |
| Material 3 | PA46 | 0 | 100 | Polyamide obtained by condensation polymerizing tetramethylenediamine and adipic acid | 1.2 |
| Material 4 | PA9T+1 | 1 | 100 | Polyamide containing 1,9-nonanediamine and 2-methyl- 1, 8-octanediamine in a molar ratio of 80:20 as diamines and terephthalic acid as dicarboxylic acid | 1.2 |
| Material 5 | PA9T+3 | 3 | 100 | Polyamide containing 1,9-nonanediamine and 2-methyl- 1, 8-octanediamine in a molar ratio of 80:20 as diamines and terephthalic acid as dicarboxylic acid | 1.2 |
| Material 6 | PA9T+20 | 20 | 100 | Polyamide containing 1,9-nonanediamine and 2-methyl- 1, 8-octanediamine in a molar ratio of 60:40 as diamines and terephthalic acid as dicarboxylic acid | 1.2 |

The materials employed for the experiments were all based on polyamides which had been prepared as shown in "Polyamide composition" in Table 1. The modified polyolefin appearing in Table 1 was a maleic anhydride-modified ethylene-propylene copolymer containing 0.8% by weight of maleic anhydride and having a tensile modulus of 10 MPa at 23°C. The polyamide for Materials 1, 2, 4 and 5 was a product of Kabushiki Kaisha Kuraray known in the name of "GENESTAR N1000A". The polyamide for Material 6 was a product of Kuraray Co., Ltd., known in the name of "GENESTAR N1000C". The value of viscosity [η] appearing in Table 1 is that of intrinsic viscosity [η] (dl/g) as determined at 30°C in concentrated sulfuric acid.

Water Absorbing Tests

Articles tested by experiments were of the same shape as the cam gear 30 shown in FIG. 2 and each gear 19 had an outside diameter A of 57 mm, while each cam 21 had a major diameter B of 28 mm, both according to their drawings. Their materials differed from one article to another.

Each article was dipped in hot water having a temperature of 98°C and left for 200 hours to absorb water. The results are shown in Table 2, in which A means the outside diameter of the gear yet to be tested and ΔA means the increment found in the outside diameter of the gear as tested (i.e. the difference in the outside diameter of the gear between before and after the test).

Table 2

| Experiment No. | Material | Article shape | Gear outside dia. A | Increment ΔA | Increment ratio ΔA/A | Evaluation |
|---|---|---|---|---|---|---|
| 1 | PA9T | FIG. 2 | 57.1 mm | 0.2 mm | 0.35% | G |
| 2 | PA9T+5 | FIG. 2 | 56.8 mm | 0.2 mm | 0.35% | G |
| 3 | PA46 | FIG. 2 | 56.8 mm | 1.9 mm | 3.30% | NG |

The article tested by Experiment 1 was of the material PA9T shown in Table 1 and showed an increment ratio

($\Delta A/A$, percentage) of 0.35%. The article tested by Experiment 2 was of the material PA9T+5 and showed an increment ratio of 0.35%. The article tested by Experiment 3 was of the material PA46 and showed an increment ratio of 3.30%. These results confirmed the low water absorption of the materials PA9T and PA9T+5, insofar as the gears formed therefrom showed only an increment ratio in outside diameter which was nearly 1/10 of that formed from PA46.

Durability Tests

Each article to be tested was incorporated in an engine of the design shown at 10 in FIG. 1 and the cam gear was visually inspected after the engine was operated at a speed of 7,000 rpm. The results are shown in Table 3.

Table 3

| Experiment No. | Material | Article shape | Engine speed | Visual inspection | Evaluation |
|---|---|---|---|---|---|
| 4 | PA46 | FIG. 2 | 7000 rpm | Not broken | G |
| 5 | PA9T | FIG. 2 | 7000 rpm | Broken | NG |
| 6 | PA9T+5 | FIG. 2 | 7000 rpm | Not broken | G |

The article formed from PA9T was broken. The articles formed from PA46 and PA9T+5 were not broken, but were found sound. Thus, the results of Experiments 4 and 6 were evaluated as G, while the result of Experiment 5 was NG.

Sliding Tests

Sliding wear is a vital defect of any resinous cam gear. Accordingly, flat sheets were formed from different materials and were subjected to thrust wear tests as specified by JIS K 7218-A. A Suzuki's wear testing machine was used to test each sheet by holding it against a liquid ring #600 made of S45C at a pressure of 250 kg/cm$^2$ and causing it to slide thereon at a rate of 30 cm per second for 100 minutes in an engine oil having a temperature of 60°C. The results are shown in Table 4.

Table 4

| Experiment No. | Material | Article shape | Test ring | Coefficient of friction | Wear | Surface | Evaluation |
|---|---|---|---|---|---|---|---|
| 7 | PA9T | Flat sheet | S45C | 0.15 | 266 mg | Rough | NG |
| 8 | PA9T+1 | Flat sheet | S45C | 0.10 | 120 mg | Rough | NG |
| 9 | PA9T+3 | Flat sheet | S45C | 0.10 | 99 mg | Rough | NG |
| 10 | PA9T+5 | Flat sheet | S45C | 0.05 | 39 mg | Smooth | G |
| 11 | PA46 | Flat sheet | S45C | 0.05 | 5 mg | Smooth | G |

Experiments 7 to 10 were conducted on articles formed from materials containing the modified polyolefin in gradually increasing proportions, i.e. 0 (zero), 1, 3 and 5 parts by weight, respectively. The results confirmed that a reduction in wear and thereby an improvement in wear resistance could be attained by an increase in the proportion of the modified polyolefin. The surfaces of the sheets tested by Experiments 7 to 9 were found rough due to melting, etc. On the other hand, the sheets tested by Experiments 10 and 11 remained smooth. Accordingly, the results of Experiments 7 to 9 were evaluated as NG, and the results of Experiments 10 and 11 as G.

Cam Wear Resistance Tests

Finally, cam wear resistance tests were conducted. Articles to be tested were prepared from different materials and each article was incorporated in an engine of the design shown in FIG. 1 and had its wear examined on the major diameter B of the cam as shown in FIG. 2 after a certain time of engine operation. The test details and results are shown in Table 5.

Table 5

| Experiment No. | Material | Article shape | Engine speed rpm | * Wear on B/(Engine speed × hours) | Evaluation |
|---|---|---|---|---|---|
| 12 | PA9T | FIG. 2 | 4500 | $6.6 \times 10^{-4}$ | NG |
| 13 | PA9T+5 | FIG. 2 | 4500 | $1.2 \times 10^{-4}$ | G |
| 14 | PA46 | FIG. 2 | 4500 | $0.8 \times 10^{-4}$ | G |
| 15 | PA9T+5 | FIG. 2 | 5500 | $1.3 \times 10^{-4}$ | G |
| 16 | PA9T+20 | FIG. 2 | 5500 | $1.8 \times 10^{-4}$ | G |
| 17 | PA9T+5 | FIG. 2 | 7000 | $1.4 \times 10^{-4}$ | G |
| 18 | PA46 | FIG. 2 | 7000 | $0.1 \times 10^{-4}$ | G |

Each value * in the second column from right is a value as calculated by taking any difference in engine speed and testing time into account. As wear is proportional to time and speed (rotating speed), the value * was calculated by the expression:

$$\text{Wear } (\mu m) \text{ on cam diameter B } / \text{ (time (h)} \times \text{engine speed (rpm))}$$

When * did not exceed $2 \times 10^{-4}$, the result was evaluated as G, and when * exceeded $2 \times 10^{-4}$, the result was evaluated as NG. Accordingly, the results of Experiments 13 to 18 were evaluated as G, and the result of Experiment 12 as NG.
The following is a summary of the results of the tests conducted as described above. Table 6 is a combination of a part of Table 1 and the evaluation (G or NG) made in each of Tables 2 to 5.

Table 6

| Material No. | Symbol | Proportion (parts by weight) | | Water absorption | Durability | Wear resistance | Cam wear | Overall evaluation |
|---|---|---|---|---|---|---|---|---|
| | | Modified polyolefin | Polyamide | | | | | |
| Material 1 | PA9T | 0 | 100 | G | NG | NG | NG | NG |
| Material 2 | PA9T+5 | 5 | 100 | G | G | G | G | G |
| Material 3 | PA46 | 0 | 100 | NG | G | G | G | NG |
| Material 4 | PA9T+1 | 1 | 100 | | | NG | | NG |
| Material 5 | PA9T+3 | 3 | 100 | | | NG | | NG |
| Material 6 | PA9T+20 | 20 | 100 | (G) | (G) | (G) | G | G |

The overall evaluation for Material 1 (PA9T) was NG, since its evaluation was NG in durability, wear resistance and cam wear. The overall evaluation for Material 2 (PA9T+5) was G, since its evaluation was G in all of water absorption, durability and wear resistance. The overall evaluation for Material 3 (PA46) was NG, since its evaluation was NG in water absorption. The overall evaluation for Material 4 (PA9T+1) and Material 5 (PA9T+3) was NG, since their evaluation was NG in wear resistance.
Although Material 6 (PA9T+20) was not tested for water absorption, its evaluation was expected as (G), since it was clear from Table 2 that any material based on PA9T was acceptable in water absorption. As it was clear from Table 3 that any material containing at least 5 parts by weight of modified polyolefin in PA9T was acceptable in durability, Material 6 was expected as (G) in durability, though it was not tested. As it was clear from Table 4 that any material containing at least 5 parts by weight of modified polyolefin in PA9T was acceptable in wear resistance, Material 6 was expected as (G) in wear resistance, though it was not tested. Its evaluation in cam wear was G, as stated in Table 5. Accordingly, the overall evaluation for Material 6 (PA9T+20) was G, since it was expected to be a very good material from the standpoints of water absorption, durability and wear resistance.

It is obvious from the foregoing that a material containing 100 parts by weight of polyamide and 5 to 20 parts by weight of modified polyolefin can be expected to be a very good material from the standpoints of water absorption, durability and wear resistance and make a resinous cam gear suitable for an engine. It is needless to say that this invention is also applicable to a cam or gear alone. It is also needless to say that the cam gear according to this invention is suitable not only for a general-purpose engine, but for a vehicle-mounted engine as well.

**Claims**

1. A cam gear (30) formed from a resinous material comprising 100 parts by weight of polyamide and 5 to 20 parts by weight of modified polyolefin, the polyamide being composed of dicarboxylic acid units containing 60 to 100 mole % of terephthalic acid units and diamine units containing 60 to 100 mole % of 1,9-nonanediamine units and/or 2-methyl-1,8-octadiamine units.

2. The cam gear of claim 1, wherein the modified polyolefin has a tensile modulus of 50 MPa or below at 23 °C.

3. The cam gear of claim 1 or claim 2 wherein, in addition to the terephthalic acid units, said polyamide is composed of up to 40% by weight of units derived from at least one other dicarboxylic acid selected from aliphatic dicarboxylic acids, alicyclic dicarboxylic acids and aromatic dicarboxylic acids.

4. The cam gear of any of claims 1 to 3 wherein the diamine units comprise both 1,9-nonanediamine units and 2-methyl-1,8-octadiamine units in a molar ratio of between 90:10 and 50:50 1,9-nonanediamine units to 2-methyl-1,8-octadiamine units.

5. The cam gear of any of claims 1 to 4 wherein in addition to the 1,9 - nonanediamine units and/or 2-methyl-1,8-octadiamine units, said polyamide is composed of up to 40% by weight of diamine units derived from at least one other diamine selected from aliphatic diamines, alicyclic diamines and aromatic diamines.

6. The cam gear of any of claims 1 to 5 wherein said polyamide has at least 10% of its polymer chains terminated by a terminal stopper derived from at least one monofunctional compound having reactivity for the terminal amino or terminal carboxylic acid groups of the polyamide.

7. The cam gear of any of claims 1 to 6 wherein said polyamide is obtainable by forming a nylon salt from said diamine, said dicarboxylic acid, a catalyst and optionally a terminal stopper, heating it at a temperature of 200°C to 250°C to form a prepolymer having an intrinsic viscosity [η] of 0.1 to 0.6 dl/g at 30°C in concentrated sulfuric acid and subjecting it to solid-phase or melt-extrusion polymerization.

8. The cam gear as claimed in any of claims 1 to 7 wherein said modified polyolefin comprises carboxyl, carboxylic acid ester, acid anhydride and/or epoxy groups.

9. Use of a resinous material comprising 100 parts by weight of polyamide and 5 to 20 parts by weight of modified polyolefin in the manufacture of a cam gear, the resinous composition being as defined in any of claims 1 to 8.

10. An engine comprising a cam gear as claimed in any of claims 1 to 8.

**Patentansprüche**

1. Nockengetriebe (30), das aus einem Harzmaterial gebildet ist, das 100 Gewichtsanteile Polyamid und 5 bis 100 Gewichtsanteile von modifiziertem Polyolefin umfasst, wobei das Polyamid aus Dicarbonsäureeinheiten mit 60 bis 100 mol% Terephtalinsäureeinheiten und Diamineinheiten mit 60 bis 100 mol% 1,9-Nonandiamineinheiten und/oder 2-Methyl-1,8-Octadiamineinheiten zusammengesetzt ist.

**2.** Nockengetriebe nach Anspruch 1, wobei das modifizierte Polyolefin ein Zugmodul von 50 MPa oder geringer bei 23°C hat.

**3.** Nockengetriebe nach Anspruch 1 oder Anspruch 2, wobei zusätzlich zu den Terephtalinsäureeinheiten das Polyamid zusammengesetzt ist aus bis zu 40 Gew.-% von Einheiten, die abgeleitet sind von mindestens einer anderen Dicarbonsäure ausgewählt aus aliphatischen Dicarbonsäuren, alizyklischen Dicarbonsäuren und aromatischen Dicarbonsäuren.

**4.** Nockengetriebe nach einem der Ansprüche 1 bis 3, wobei die Diamineinheiten sowohl 1,9 Nonandiamineinheiten wie auch 2-Methyl-1,8-0ctadiamineinheiten in einem molaren Verhältnis zwischen 90:10 und 50:50 1,9-Nonandiamineinheiten zu 2-Methyl-1,8-Octadiamineinheiten enthalten.

**5.** Nockengetriebe nach einem der Ansprüche 1 bis 4, wobei zusätzlich zu den 1,9-Nonandiamineinheiten und/oder 2-Methyl-1,8-Octadiamineinheiten das Polyamid zusammengesetzt ist aus bis zu 40 Gew.-% Diamineinheiten, die abgeleitet sind von mindestens einem anderen Diamin ausgewählt aus aliphatischem Diamin, alizyklischem Diamin und aromatischem Diamin.

**6.** Nockengetriebe nach einem der Ansprüche 1 bis 5, wobei mindestens 10 % der Polymerketten des Polyamids durch ein Abschlussabstoppmittel abgeleitet von mindestens einer Monofunktionalverbindung abgeschlossen wird, die Reaktivität für die Abschlussamino- oder Abschlusscarboxylsäuregruppen des Polyamids aufweist.

**7.** Nockengetriebe nach einem der Ansprüche 1 bis 6, wobei das Polyamid erhältlich ist durch Bilden eines Nylonsalzes aus dem Diamin, der Dicarbonsäure, einem Katalysator und optional einem Abschlussabstoppmittel, Erwärmen desselben bei einer Temperatur von 200°C bis 250°C, um ein Vorpolymer mit einer intrinsischen Viskosität $[\eta]$ von 0,1 bis 0,6 dl/g bei 30°C in konzentrierter Schwefelsäure zu bilden und Unterziehen desselben einer Festphasen- oder Schmelzextrusion-Polymerisation.

**8.** Nockengetriebe nach einem der Ansprüche 1 bis 7, wobei das modifizierte Polyolefin Carboxyl, Carboxylsäureester, Säureanhydrit und/oder Epoxygruppen umfasst.

**9.** Verwendung eines harzartigen Materials mit 100 Gewichtsanteilen Polyamid und 5 bis 20 Gewichtsanteilen modifiziertem Polyolefin bei der Herstellung eines Nockengetriebes, wobei die harzartige Zusammensetzung ist wie in einem der Ansprüche 1 bis 8 definiert ist.

**10.** Motor, umfassend ein Nockengetriebe nach einem der Ansprüche 1 bis 8.

**Revendications**

**1.** Roue à came (30) formée par une matière résineuse comprenant 100 parties en poids de polyamide et de 5 à 20 parties en poids de polyoléfine modifiée, le polyamide étant composé de motifs acide dicarboxylique contenant de 60 à 100 % en mole de motifs acide téréphtalique et de motifs diamine contenant de 60 à 100 % en mole de motifs 1,9-nonanediamine et/ou de motifs 2-méthyl-1,8-octanediamine.

**2.** Roue à came selon la revendication 1, dans laquelle la polyoléfine modifiée a un module en traction de 50 MPa ou inférieur à 23°C.

**3.** Roue à came selon la revendication 1 ou 2 dans laquelle, en plus des motifs acide téréphtalique, ledit polyamide est composé de jusqu'à 40 % en poids de motifs dérivés d'au moins un autre acide dicarboxylique choisi parmi les acides dicarboxyliques aliphatiques, les acides dicarboxyliques alicycliques et les acides dicarboxyliques aromatiques.

**4.** Roue à came selon l'une quelconque des revendications 1 à 3, dans laquelle les motifs diamine comprennent à la fois des motifs 1,9-nonanediamine et des motifs 2-méthyl-1,8-octanediamine en un rapport molaire compris entre 90:100 et 50:50 de motifs 1,9-nonanediamine par rapport aux motifs 2-méthyl-1,8-octanediamine.

**5.** Roue à came selon l'une quelconque des revendications 1 à 4 dans laquelle, en plus des motifs 1,9-nonanediamine et/ou des motifs 2-méthyl-1,8-octanediamine, ledit polyamide est composé de jusqu'à 40 % en poids de motifs diamine dérivés d'au moins une autre diamine choisie parmi les diamines aliphatiques, les diamines alicycliques et les diamines aromatiques.

6. Roue à came selon l'une quelconque des revendications 1 à 5, dans laquelle ledit polyamide a au moins 10 % de ses chaînes polymères terminées par un stoppeur terminal dérivé d'au moins un composé monofonctionnel ayant une réactivité pour les groupes amino terminaux ou acide carboxylique terminaux du polyamide.

7. Roue à came selon l'une quelconque des revendications 1 à 6, dans laquelle ledit polyamide peut être obtenu en formant un sel de nylon à partir de ladite diamine, ledit acide dicarboxylique, un catalyseur et optionnellement un stoppeur terminal, en le chauffant à une température de 200°C à 250°C pour former un prépolymère ayant une viscosité intrinsèque [η] de 0,1 à 0,6 dl/g à 30°C dans l'acide sulfurique concentré et en le soumettant à une polymérisation en phase solide ou par extrusion à l'état fondu.

8. Roue à came selon l'une quelconque des revendications 1 à 7, dans laquelle ladite polyoléfine modifiée comprend des groupes carboxyle, ester d'acide carboxylique, anhydride d'acide et/ou époxy.

9. Utilisation d'une matière résineuse comprenant 100 parties en poids de polyamide et de 5 à 20 parties en poids de polyoléfine modifiée dans la fabrication d'une roue à came, la composition résineuse étant comme définie à l'une quelconque des revendications 1 à 8.

10. Moteur comprenant une roue à came selon l'une quelconque des revendications 1 à 8.

# FIG. 1

# FIG. 2

# FIG. 3

**EP 1 652 888 B1**

## REFERENCES CITED IN THE DESCRIPTION

**Patent documents cited in the description**

- JP H9273403 A